# EUROPEAN PATENT APPLICATION

(11) **EP 4 852 066 A1**
(43) Date of publication of application: **09.12.2026**
(21) Application number: 25762416.3
(22) Date of filing: 28.02.2025
(51) Int. Cl.: H01M 4/04, H01M 10/052, H01M 4/139, B30B 3/00, B30B 3/04, B30B 11/20

(54) **ELECTRODE SHEET ROLLING APPARATUS AND METHODE**

(30) Priority: 28.02.2024 KR 20240029247
(71) Applicant: LG Energy Solution, Ltd., Seoul 07335 (KR)
(72) Inventor: SEO, Jeonghyeop, Daejeon 34122 (KR)
(74) Representative: Plasseraud IP
(86) International application number: PCT/KR2025/002821
(87) International publication number: WO 2025/183499

(57) **Abstract**

The present invention provides an electrode sheet rolling apparatus 10 including: a cylindrical first rolling roller 100 and a second rolling roller 200 arranged to face each other with the electrode sheet 50, being transported in a lengthwise direction, interposed therebetween, wherein the first rolling roller 100 and the second rolling roller 200 are in contact with the electrode sheet 50 passing therebetween and rotate around a first rotation axis A1 and a second rotation axis A2 extending in a widthwise direction, respectively. The second rolling roller 200 may be in contact with the electrode sheet 50 along a circumference thereof over a first angle section G1 about the second rotation axis A2. The first angle section G1 may include: a first sub-section U1 equal to or greater than a minimum angle of the first angle section G1 and equal to or less than a first angle L1 at which the first rotation axis A1 is located with respect to the second rotation axis A2; and a second sub-section U2 equal to or greater than the first angle L1 and equal to or less than a maximum angle of the first angle section G1. The electrode sheet 50 may be spaced apart from the first rolling roller 100 in at least a portion of the first sub-section U1 and at least a portion of the second sub-section U2.

## Description

### [TECHNICAL FIELD]

This application claims the benefit of priority based on Korean Patent Application No. 10-2024-0029247 filed on February 28, 2024, entire content disclosed in the document of the patent applications is included as a part of this specification.

The present invention relates to an electrode sheet rolling apparatus and an electrode sheet rolling method capable of reducing the size, installation space and number of rolling rollers of a tandem rolling apparatus, reducing manufacturing, installation and maintenance costs, and reducing or optimizing the transport distance or transport path of an electrode sheet.

### [BACKGROUND ART]

As the technology development and demand for mobile devices increase, the demand for secondary batteries as an energy source is rapidly increasing, and recently, the use of secondary batteries as a power source for electric vehicles (EVs) and hybrid electric vehicles (HEVs) is being realized, and among such secondary batteries, the demand for secondary lithium batteries with high energy density, high discharge voltage, and output stability is high.

In order to increase the energy density of secondary lithium batteries, the manufacture of electrodes (anode or cathode) with high rolling density is essential.

The electrode of a lithium secondary battery may be obtained as an electrode sheet. For example, the electrode is manufactured by rolling and forming an electrode sheet coated with a composite layer including electrode active material using a rolling apparatus. Here, the electrode sheet is rolled taking into consideration the density distribution, thickness, thickness distribution, precision, etc. of the desired composite layer.

However, the electrode sheet has a problem in that the composite layer containing the electrode active material becomes thicker than desired over time due to the tendency to return to original state due to the stress accumulated in the powder of the electrode active material during rolling, i.e., a severe spring-back phenomenon.

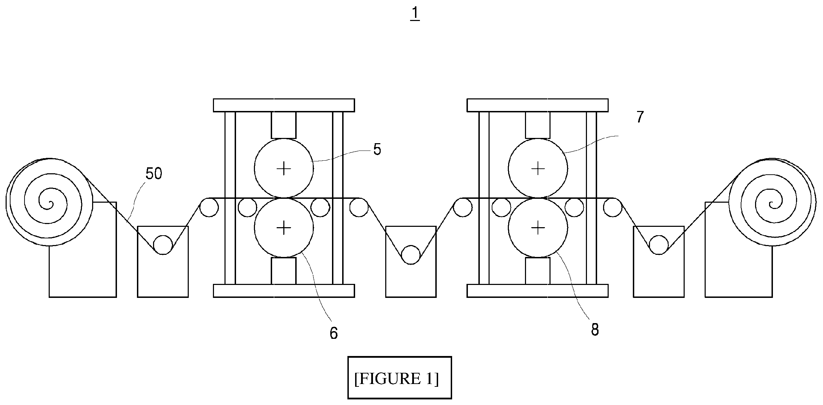

As a result, a tandem rolling apparatus that performs multiple consecutive rolling cycles is used. However, a conventional tandem rolling apparatus 1 has multiple rolling apparatuses 5, 6, 7 and 8 arranged in a straight line, as shown in FIG. 1, resulting in a large electrode sheet rolling apparatus 1. This may lead to spatial constraints in tandem rolling apparatus, and increase manufacturing, installation and maintenance costs. Furthermore, the transport distance of the electrode sheet 50 becomes longer and the transport path becomes more complex, which may lower electrode productivity.

Therefore, a method for reducing the size of the tandem rolling equipment is required. A pertinent prior art is Korean Patent Application Publication No. 10-2018-0068520.

### [DISCLOSURE]

### [TECHNICAL PROBLEM]

In order to solve above-described problems, it is an object of the present invention to provide an electrode sheet rolling apparatus and an electrode sheet rolling method with reduced size, installation space and number of rolling rollers, reduced manufacturing, installation and maintenance costs, and reduced or optimized transport distance or path of an electrode sheet.

It is an object of the present invention to provide an electrode sheet rolling apparatus and an electrode sheet rolling method capable of improving the quality and extending the life of electrodes and secondary batteries even when the electrode sheet is rolled in a bent state.

It is an object of the present invention to provide an electrode sheet rolling apparatus and an electrode sheet rolling method capable of stably, strongly and uniformly adhering a composite layer to an electrode current collector.

It is an object of the present invention to provide an electrode sheet rolling apparatus and an electrode sheet rolling method capable of performing stable rolling.

It is an object of the present invention to provide an electrode sheet rolling apparatus and an electrode sheet rolling method capable of facilitating implementation of a tandem rolling device.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides an electrode sheet rolling apparatus 10 for rolling an electrode sheet 50 in which one or more composite layers 54 and 56 containing an electrode active material are formed on an electrode current collector 52 to a predetermined thickness, including: a cylindrical first rolling roller 100 and a second rolling roller 200.

The first rolling roller 100 and the second rolling roller 200 may be arranged to face each other with the electrode sheet 50, being transported in a lengthwise direction, interposed therebetween.

The first rolling roller 100 and the second rolling roller 200 may be in contact with the electrode sheet 50 passing therebetween.

The first rolling roller 100 and the second rolling roller 200 may rotate around a first rotation axis A1 and a second rotation axis A2 extending in a widthwise direction, respectively.

The second rolling roller 200 may be in contact with the electrode sheet 50 along a circumference thereof over a first angle section G1 about the second rotation axis A2.

The first angle section G1 comprises: a first sub-section U1; and a second sub-section U2.

The first sub-section U1 may be an angle section equal to or greater than a minimum angle of the first angle section G1 and equal to or less than a first angle L1 at which the first rotation axis A1 is located with respect to the second rotation axis A2.

The second sub-section U2 may be an angle section equal to or greater than the first angle L1 and equal to or less than a maximum angle of the first angle section G1.

The electrode sheet 50 may be spaced apart from the first rolling roller 100 in at least a portion of the first sub-section U1 and at least a portion of the second sub-section U2.

In one embodiment, the first sub-section U1 may have an angular extent equal to or greater than 0 degrees and equal to or less than 90 degrees.

The second sub-section U2 may have an angular extent equal to or greater than the angular extent of the first sub-section U1 and may be equal to or less than 180 degrees minus the angular extent of the first sub-section U1.

In one embodiment, the angular extent of the second sub-section U2 may correspond to the angular extent of the first sub-section U1.

In one embodiment, the electrode sheet rolling apparatus 10 may further include a guide 400 and a cylindrical third rolling roller 300.

The guide 400 may be in contact with the electrode sheet 50 after the electrode sheet (50) passes between the first rolling roller 100 and the second rolling roller 200.

The guide 400 may change a transport direction of the electrode sheet 50.

The cylindrical third rolling roller 300 may be arranged to face the first rolling roller 100 with the electrode sheet 50, whose the transport direction has been changed by the guide 400, interposed therebetween.

The third rolling roller 300 may be in contact with the electrode sheet 50 passing between the first rolling roller 100 and the third rolling roller 300.

The third rolling roller 300 may rotate around a third rotation axis A3 extending in the widthwise direction.

In one embodiment, the third rolling roller 300 may be in contact with the electrode sheet 50 along a circumference thereof over a second angle section G2 about the third rotation axis A3.

The second angle section G2 may include: a third sub-section U3; and a fourth sub-section U4.

The third sub-section U3 may be an angle section equal to or greater than a minimum angle of the second angle section G2 and equal to or less than a second angle L2 at which the first rotation axis A1 is located with respect to the third rotation axis A3.

The fourth sub-section U4 may be an angle section equal to or greater than the second angle L2 and equal to or less than a maximum angle of the second angle section G2.

The electrode sheet 50 may be spaced apart from the first rolling roller 100 in at least a portion of the third sub-section U3 and at least a portion of the fourth sub-section U4.

In one embodiment, the third sub-section U3 may have an angular extent equal to or greater than 0 degrees and equal to or less than 90 degrees.

The fourth sub-section U4 may have an angular extent equal to or greater than the angular extent of the third sub-section U3 and equal to or less than 180 degrees minus the angular extent of the third sub-section U3.

In one embodiment, the first sub-section U1 may have an angular extent equal to or greater than 0 degrees and equal to or less than 90 degrees.

The second sub-section U2 may have an angular extent equal to or greater than the angular extent of the first sub-section U1 and equal to or less than 180 degrees minus the angular extent of the first sub-section U1.

In one embodiment, the angular extent of the fourth sub-section U4 may correspond to that of the third sub-section U3.

In one embodiment, the guide 400 may be a roller.

In one embodiment, a triangle having a base connecting the second rotation axis A2 and the third rotation axis A3 may be formed when the first rotation axis A1, the second rotation axis A2 and the third rotation axis A3 are connected in an imaginary plane perpendicular to the first rotation axis A1, the second rotation axis A2 and the third rotation axis A3.

The guide 400 may be positioned between the second rolling roller 200 and the third rolling roller 300 in an extending direction of the base, and may be positioned, in a direction perpendicular to the base, on an opposite side from the first rotation axis A1 and the first rolling roller 100, the first rotation axis A1 and the first rolling roller 100 being positioned on one side of the base.

In one embodiment, a diameter of the first rolling roller 100 may be larger than those of the second rolling roller 200 and the third rolling roller 300.

The guide 400 may be positioned between the second rolling roller 200 and the third rolling roller 300.

In one embodiment, the diameter of the second rolling roller 200 may correspond to that of the third rolling roller 300.

In one embodiment, a triangle having a base connecting the second rotation axis A2 and the third rotation axis A3 may be formed when the first rotation axis A1, the second rotation axis A2 and the third rotation axis A3 may be connected in an imaginary plane perpendicular to the first rotation axis A1, the second rotation axis A2 and the third rotation axis A3.

The guide 400 may be positioned between the second rolling roller 200 and the third rolling roller 300 in an extending direction of the base, and is positioned, in a direction perpendicular to the base, on an opposite side from the first rotation axis A1 and the first rolling roller 100, the first rotation axis A1 and the first rolling roller 100 being positioned on one side of the base.

A diameter of the first rolling roller 100 may be larger than those of the second rolling roller 200 and the third rolling roller 300.

The guide 400 may be disposed between the second rolling roller 200 and the third rolling roller 300.

Each of the first sub-section U1, second sub-section U2, third sub-section U3 and fourth sub-section U4 may have an angular extent equal to or greater than 20 degrees and equal to or less than 40 degrees.

In order to solve above-described problems, the present invention provides electrode sheet rolling method S500 including a rolling process S510.

In the rolling process S510, the electrode sheet 50, transported in the lengthwise direction, is rolled between the first rolling roller 100 and the second rolling roller 200 while being in contact with the second rolling roller 200 along the circumference thereof over the first angle section G1 about the second rotation axis A2, the electrode sheet 50 being rolled at the first angle L1 about the second rotation axis A2.

Here, the electrode sheet 50 may be spaced apart from the first rolling roller 100 in at least a portion of the first sub-section U1 before rolling and in at least a portion of the second sub-section U2 after rolling.

In one embodiment, the electrode sheet rolling apparatus 10 may include: a guide 400; and a cylindrical third rolling roller 300.

The guide 400 may be in contact with the electrode sheet 50 after the electrode sheet (50) passes between the first rolling roller 100 and the second rolling roller 200.

The guide 400 may change a transport direction of the electrode sheet 50.

The third rolling roller 300 may be arranged to face the first rolling roller 100 with the electrode sheet 50, whose transport direction has been changed by the guide 400, interposed therebetween.

The third rolling roller 300 may be in contact with the electrode sheet 50 passing between the first rolling roller 100 and the third rolling roller 300.

The third rolling roller 300 may rotate around a third rotation axis A3 extending in the widthwise direction.

The third rolling roller 300 may be in contact with the electrode sheet 50 along a circumference thereof over a second angle section G2 about the third rotation axis A3.

The second angle section G2 may include: a third sub-section U3; and a fourth sub-section U4.

The third sub-section U3 may be an angle section equal to or greater than a minimum angle of the second angle section G2 and equal to or less than a second angle L2 at which the first rotation axis A1 is located with respect to the third rotation axis A3.

The a fourth sub-section U4 may be an angle section equal to or greater than the second angle L2 and equal to or less than a maximum angle of the second angle section G2.

The electrode sheet 50 may be spaced apart from the first rolling roller 100 in at least a portion of the third sub-section U3 and at least a portion of the fourth sub-section U4.

In the rolling process S510, the electrode sheet 50 whose transport direction changed by the guide 400 after rolling between the first rolling roller 100 and the second rolling roller 200 is rolled between the first rolling roller 100 and the third rolling roller 300 while being in contact with the third rolling roller 300 along a circumference thereof over the second angle section G2 about the third rotation axis A3, the electrode sheet (50) being rolled at the second angle (L2) about the third rotation axis (A3) .

Here, the electrode sheet 50 may be spaced apart from the first rolling roller 100 in at least a portion of the third sub-section U3 before rolling and in at least a portion of the fourth sub-section U4 after rolling.

### [ADVANTAGEOUS EFFECTS]

According to the embodiments of the present invention, the electrode sheet rolling apparatus 10 for rolling an electrode sheet 50 in which one or more composite layers 54 and 56 containing an electrode active material are formed on an electrode current collector 52 to a predetermined thickness, the electrode sheet rolling apparatus 10 may include: a cylindrical first rolling roller 100 and a second rolling roller 200 arranged to face each other with the electrode sheet 50, being transported in a lengthwise direction, interposed therebetween, wherein the first rolling roller 100 and the second rolling roller 200 are in contact with the electrode sheet 50 passing therebetween and rotate around a first rotation axis A1 and a second rotation axis A2 extending in a widthwise direction, respectively. The second rolling roller 200 may be in contact with the electrode sheet 50 along a circumference thereof over a first angle section G1 about the second rotation axis A2. The first angle section G1 may include: a first sub-section U1 equal to or greater than a minimum angle of the first angle section G1 and equal to or less than a first angle L1 at which the first rotation axis A1 is located with respect to the second rotation axis A2; and a second sub-section U2 equal to or greater than the first angle L1 and equal to or less than a maximum angle of the first angle section G1. The electrode sheet 50 may be spaced apart from the first rolling roller 100 in at least a portion of the first sub-section U1 and at least a portion of the second sub-section U2.

Accordingly, since the electrode sheet 50 is in long contact along the circumference of the second rolling roller 200 over the first angle section G1, the transport direction of the electrode sheet 50 may be sufficiently changed. Accordingly, the size and number of rolling rollers of a tandem rolling device 10 that performs multiple consecutive rolling operations may be reduced. That is, the size of the rolling device and the number of rolling rollers may be reduced compared to a conventional tandem rolling device in which the transport direction of the electrode sheet 50 is straight, and thus, multiple rolling apparatuses must be arranged in a straight line. When the size of the tandem rolling device and the number of rolling rollers are reduced, the installation space is reduced such that the manufacturing, installation and maintenance costs of the tandem rolling device may be reduced. In addition, since the transport distance of the electrode sheet 50 may be shortened and the transport path may be simplified, electrode productivity may be improved.

In addition, since the electrode sheet 50 is in long contact along the circumference of the second rolling roller 200 over each of the first sub-section U1 and the second sub-section U2, the electrode sheet 50 may be maintained in a consistently bent state along the circumference of the second rolling roller 200 during, before and after rolling (e.g., primary rolling). As a result, even when the electrode sheet 50 is rolled in a bent state, the one or more composite layers 54 and 56 may be stably, strongly and uniformly adhered to the electrode current collector 52 after rolling. Accordingly, the one or more composite layers 54, 56 are not separated from the electrode current collector 52 due to contraction and expansion caused by repeated charging and discharging, the resistance does not increase such that an abnormal heating phenomenon may not occur, and the capacity of the battery may not decrease. That is, even when the electrode sheet 50 is rolled in a bent state, the quality of the electrode and secondary batteries may be improved and the service life may be extended.

In addition, since the electrode sheet 50 is rolled in a consistently bent state along the circumference of the second rolling roller 200, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

According to the embodiments of the present invention, the first sub-section U1 may have an angular extent equal to or greater than 0 degrees and equal to or less than 90 degrees. The second sub-section U2 may have an angular extent equal to or greater than the angular extent of the first sub-section U1 and may be equal to or less than 180 degrees minus the angular extent of the first sub-section U1.

Accordingly, the friction force acting between the electrode sheet 50 and the second rolling roller 200 in the second sub-section U2 may be equal to or greater than the friction force acting between the electrode sheet 50 and the second rolling roller 200 in the first sub-section U1. Therefore, the electrode sheet 50 may be prevented from being pushed in the direction opposite to the transport direction of the electrode sheet 50 during rolling (e.g., primary rolling).

In addition, since the electrode sheet 50 may be in long contact along the circumference of the second rolling roller 200 over the second sub-section U2, the electrode sheet 50 may be maintained in a consistently bent state along the circumference of the second rolling roller 200 during and after rolling (e.g., primary rolling). Accordingly, since the electrode sheet 50 does not quickly change to a consistently unbent state or a straightened state after rolling (e.g., primary rolling), the one or more composite layers 54 and 56 may be stably, strongly and uniformly adhered to the electrode current collector 52.

According to the embodiments of the present invention, the angular extent of the second sub-section U2 may correspond to that of the first sub-section U1.

Accordingly, the frictional forces acting between the electrode sheet 50 and the second rolling roller 200 in the first sub-section U1 and the second sub-section U2 may be balanced. Therefore, rolling (e.g., primary rolling) may be performed stably.

According to the embodiments of the present invention, the electrode sheet rolling apparatus may further include: a guide 400 in contact with the electrode sheet 50 after the electrode sheet 50 passes between the first rolling roller 100 and the second rolling roller 200 and configured to change a transport direction of the electrode sheet 50; and a cylindrical third rolling roller 300 facing the first rolling roller 100 with the electrode sheet 50, whose transport direction has been changed by the guide 400, interposed therebetween wherein the third rolling roller 300 is in contact with the electrode sheet 50 passing between the first rolling roller 100 and the third rolling roller 300, and rotates around a third rotation axis A3 extending in the widthwise direction.

Accordingly, a tandem rolling apparatus that performs two consecutive rolling operations may be easily implemented with three rolling rollers. As a result, the size of the tandem rolling apparatus and the number of rolling rollers may be reduced. Thus, the installation space of the tandem rolling apparatus may be reduced, and the manufacturing, installation and maintenance costs may be reduced. In addition, since the transport distance of the electrode sheet 50 may be shortened and the transport path may be simplified, electrode productivity may be improved.

According to the embodiments of the present invention, the third rolling roller 300 may be in contact with the electrode sheet 50 along a circumference thereof over a second angle section G2 about the third rotation axis A3. The second angle section G2 may include: a third sub-section U3 equal to or greater than a minimum angle of the second angle section G2 and equal to or less than a second angle L2 at which the first rotation axis A1 is located with respect to the third rotation axis A3; and a fourth sub-section U4 equal to or greater than the second angle L2 and equal to or less than a maximum angle of the second angle section G2. The electrode sheet 50 may be spaced apart from the first rolling roller 100 in at least a portion of the third sub-section U3 and at least a portion of the fourth sub-section U4.

Accordingly, since the electrode sheet 50 is in long contact along the circumference of the third rolling roller 300 over the second angle section G2, the transport direction of the electrode sheet 50 may be sufficiently changed. As a result, since the transport direction of the electrode sheet 50 exiting the tandem rolling apparatus 10 may be appropriately adjusted, the installation and maintenance costs of the electrode sheet rolling apparatus 10 may be reduced. In addition, since the transport distance of the electrode sheet 50 may be shortened and the transport path may be simplified, electrode productivity may be improved. Furthermore, the conventional tandem rolling apparatus may be easily replaced.

In addition, since the electrode sheet 50 is in long contact along the circumference of the third rolling roller 300 over each of the third sub-section U3 and the fourth sub-section U4, the electrode sheet 50 may be maintained in a consistently bent state along the circumference of the third rolling roller 300 during, before and after rolling (e.g., secondary rolling). As a result, even when the electrode sheet 50 is rolled in a bent state, the one or more composite layers 54 and 56 may be stably, strongly and uniformly adhered to the electrode current collector 52 after rolling.

In addition, since the electrode sheet 50 is rolled in a consistently bent state along the circumference of the third rolling roller 300, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

According to the embodiments of the present invention, the third sub-section U3 may have an angular extent equal to or greater than 0 degrees and equal to or less than 90 degrees. The fourth sub-section U4 may have an angular extent equal to or greater than the angular extent of the third sub-section U3 and equal to or less than 180 degrees minus the angular extent of the third sub-section U3.

Accordingly, the friction force acting between the electrode sheet 50 and the third rolling roller 300 in the fourth sub-section U4 may be equal to or greater than the friction force acting between the electrode sheet 50 and the third rolling roller 300 in the third sub-section U3. Therefore, the electrode sheet 50 may be prevented from being pushed in the direction opposite to the transport direction of the electrode sheet 50 during rolling (e.g., secondary rolling).

In addition, since the electrode sheet 50 may be in long contact along the circumference of the third rolling roller 300 over the fourth sub-section U4, the electrode sheet 50 may be maintained in a consistently bent state along the circumference of the third rolling roller 300 during and after rolling (e.g., secondary rolling). Accordingly, since the electrode sheet 50 does not quickly change to a consistently unbent state or a straightened state after rolling (e.g., secondary rolling), the one or more composite layers 54 and 56 may be stably, strongly and uniformly adhered to the electrode current collector 52.

According to the embodiments of the present invention, the first sub-section U1 may have an angular extent equal to or greater than 0 degrees and equal to or less than 90 degrees. The second sub-section U2 may have an angular extent equal to or greater than the angular extent of the first sub-section U1 and may be equal to or less than 180 degrees minus the angular extent of the first sub-section U1.

Accordingly, the electrode sheet 50 may be reliably prevented from being pushed in the direction opposite to the transport direction of the electrode sheet 50 during the primary and secondary rolling.

In addition, since the electrode sheet 50 may be in long contact along the circumferences of the second rolling roller 200 and the third rolling roller 300 over the second sub-section U2 and the fourth sub-section U4, the electrode sheet 50 may be maintained in a consistently bent state along the circumferences of the second rolling roller 200 and the third rolling roller 300 during and after the primary rolling and the secondary rolling. Accordingly, the one or more composite layers 54 and 56 may be stably, strongly and uniformly adhered to the electrode current collector 52.

According to the embodiments of the present invention, the angular extent of the fourth sub-section U4 may correspond to that of the third sub-section U3.

Accordingly, the frictional forces acting between the electrode sheet 50 and the second rolling roller 200 in the third sub-section U3 and the fourth sub-section U4 may be balanced. Therefore, rolling (e.g., secondary rolling) may be performed stably.

According to the embodiments of the present invention, the guide 400 may be a roller.

Accordingly, a tandem rolling apparatus may be easily implemented with three rolling rollers and a guide roller.

According to the embodiments of the present invention, a triangle having a base connecting the second rotation axis A2 and the third rotation axis A3 may be formed when the first rotation axis A1, the second rotation axis A2 and the third rotation axis A3 are connected in an imaginary plane perpendicular to the first rotation axis A1, the second rotation axis A2 and the third rotation axis A3. The guide 400 may be positioned between the second rolling roller 200 and the third rolling roller 300 in an extending direction of the base, and is positioned, in a direction perpendicular to the base, on an opposite side from the first rotation axis A1 and the first rolling roller 100, the first rotation axis (A1) and the first rolling roller (100) being positioned on one side of the base.

Accordingly, the installation space of the tandem rolling apparatus and the transport path of the electrode sheet 50 may be reduced.

According to the embodiments of the present invention, the diameter of the first rolling roller 100 may be larger than those of the second rolling roller 200 and the third rolling roller 300. The guide 400 may be positioned between the second rolling roller 200 and the third rolling roller 300.

Accordingly, the installation space of the tandem rolling apparatus may be minimized and the transport path of the electrode sheet 50 may be optimized.

According to the embodiments of the present invention, the diameter of the second rolling roller 200 may correspond to that of the third rolling roller 300.

Accordingly, the primary rolling and the secondary rolling may be performed stably.

According to the embodiments of the present invention, a triangle having a base connecting the second rotation axis A2 and the third rotation axis A3 may be formed when the first rotation axis A1, the second rotation axis A2 and the third rotation axis A3 are connected in an imaginary plane perpendicular to the first rotation axis A1, the second rotation axis A2 and the third rotation axis A3. The guide 400 may be positioned between the second rolling roller 200 and the third rolling roller 300 in an extending direction of the base, and is positioned, in a direction perpendicular to the base, on an opposite side from the first rotation axis A1 and the first rolling roller 100, the first rotation axis (A1) and the first rolling roller (100) being positioned on one side of the base. A diameter of the first rolling roller 100 may be larger than those of the second rolling roller 200 and the third rolling roller 300. The guide 400 may be positioned between the second rolling roller 200 and the third rolling roller 300. Each of the first sub-section U1, second sub-section U2, third sub-section U3 and fourth sub-section U4 may have an angular extent equal to or greater than 20 degrees and equal to or less than 40 degrees.

Accordingly, the installation space of the tandem rolling apparatus may be minimized and the transport path of the electrode sheet 50 may be optimized.

According to the embodiments of the present invention, an electrode sheet rolling method S500 may include: a rolling process S510 in which the electrode sheet 50, transported in the lengthwise direction, is rolled between the first rolling roller 100 and the second rolling roller 200 while being in contact with the second rolling roller 200 along a circumference thereof over the first angle section G1 about the second rotation axis A2, the electrode sheet 50 being rolled at the first angle L1 about the second rotation axis A2, wherein the electrode sheet 50 is spaced apart from the first rolling roller 100 in at least a portion of the first sub-section U1 before rolling and in at least a portion of the second sub-section U2 after rolling.

Accordingly, since the electrode sheet 50 is in long contact along the circumference of the second rolling roller 200 over the first angle section G1, the transport direction of the electrode sheet 50 may be sufficiently changed. Accordingly, the size and number of rolling rollers of a tandem rolling device 10 that performs multiple consecutive rolling operations may be reduced. That is, the size of the rolling device and the number of rolling rollers may be reduced compared to a conventional tandem rolling device in which the transport direction of the electrode sheet 50 is straight, and thus, multiple rolling apparatuses must be arranged in a straight line. When the size of the tandem rolling device and the number of rolling rollers are reduced, the installation space is reduced such that the manufacturing, installation and maintenance costs of the tandem rolling device may be reduced. In addition, since the transport distance of the electrode sheet 50 may be shortened and the transport path may be simplified, electrode productivity may be improved.

In addition, since the electrode sheet 50 is in long contact along the circumference of the second rolling roller 200 over each of the first sub-section U1 and the second sub-section U2, the electrode sheet 50 may be maintained in a consistently bent state along the circumference of the second rolling roller 200 during, before and after rolling (e.g., primary rolling). As a result, even when the electrode sheet 50 is rolled in a bent state, the one or more composite layers 54 and 56 may be stably, strongly and uniformly adhered to the electrode current collector 52 after rolling. Accordingly, the one or more composite layers 54, 56 are not separated from the electrode current collector 52 due to contraction and expansion caused by repeated charging and discharging, the resistance does not increase such that an abnormal heating phenomenon may not occur, and the capacity of the battery may not decrease. That is, even when the electrode sheet 50 is rolled in a bent state, the quality of the electrode and secondary batteries may be improved and the service life may be extended.

In addition, since the electrode sheet 50 is rolled in a consistently bent state along the circumference of the second rolling roller 200, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

According to the embodiments of the present invention, the electrode sheet rolling apparatus may further include: a guide 400 in contact with the electrode sheet 50 after the electrode sheet 50 passes between the first rolling roller 100 and the second rolling roller 200 and configured to change a transport direction of the electrode sheet 50; and a cylindrical third rolling roller 300 facing the first rolling roller 100 with the electrode sheet 50, whose transport direction has been changed by the guide 400, interposed therebetween wherein the third rolling roller 300 is in contact with the electrode sheet 50 passing between the first rolling roller 100 and the third rolling roller 300, and rotates around a third rotation axis A3 extending in the widthwise direction. The third rolling roller 300 may be in contact with the electrode sheet 50 along a circumference thereof over a second angle section G2 about the third rotation axis A3. The second angle section G2 may include: a third sub-section U3 equal to or greater than a minimum angle of the second angle section G2 and equal to or less than a second angle L2 at which the first rotation axis A1 is located with respect to the third rotation axis A3; and a fourth sub-section U4 equal to or greater than the second angle L2 and equal to or less than a maximum angle of the second angle section G2. The electrode sheet 50 is spaced apart from the first rolling roller 100 in at least a portion of the third sub-section U3 and at least a portion of the fourth sub-section U4. In the rolling process S510, the electrode sheet 50 whose transport direction changed by the guide 400 after rolling between the first rolling roller 100 and the second rolling roller 200 is rolled between the first rolling roller 100 and the third rolling roller 300 while being in contact with the third rolling roller 300 along a circumference thereof over the second angle section G2 about the third rotation axis A3, the electrode sheet 50 being rolled at the second angle L2 about the third rotation axis A3, and the electrode sheet 50 may be spaced apart from the first rolling roller 100 in at least a portion of the third sub-section U3 before rolling and in at least a portion of the fourth sub-section U4 after rolling.

Accordingly, a tandem rolling apparatus that performs two consecutive rolling operations may be easily implemented with three rolling rollers. As a result, the size of the tandem rolling apparatus and the number of rolling rollers may be reduced. Thus, the installation space of the tandem rolling apparatus may be reduced, and the manufacturing, installation and maintenance costs may be reduced. In addition, since the transport distance of the electrode sheet 50 may be shortened and the transport path may be simplified, electrode productivity may be improved.

In addition, since the electrode sheet 50 is in long contact along the circumference of the third rolling roller 300 over the second angle section G2, the (transport) direction of the electrode sheet 50 may be sufficiently changed. As a result, since the transport direction of the electrode sheet 50 exiting the tandem rolling apparatus 10 may be appropriately adjusted, the installation and maintenance costs of the electrode sheet rolling apparatus 10 may be reduced. In addition, since the transport distance of the electrode sheet 50 may be shortened and the transport path may be simplified, electrode productivity may be improved. Furthermore, the conventional tandem rolling apparatus may be easily replaced.

In addition, since the electrode sheet 50 is in long contact along the circumference of the third rolling roller 300 over each of the third sub-section U3 and the fourth sub-section U4, the electrode sheet 50 may be maintained in a consistently bent state along the circumference of the third rolling roller 300 during, before and after rolling (e.g., secondary rolling). As a result, even when the electrode sheet 50 is rolled in a bent state, the one or more composite layers 54 and 56 may be stably, strongly and uniformly adhered to the electrode current collector 52 after rolling.

In addition, since the electrode sheet 50 is rolled in a consistently bent state along the circumference of the third rolling roller 300, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

In addition to the advantageous effects described above, specific effects of the present invention will be described further while describing specific details of the present invention.

### [BRIEF DESCRIPTION OF DRAWINGS]

FIG. 1 is a side view schematically illustrating a conventional electrode sheet rolling apparatus which is a tandem rolling apparatus.
FIG. 2 is a side view schematically illustrating an electrode sheet rolling apparatus which is a tandem rolling apparatus according to an embodiment of the present invention.
FIG. 3 is an enlarged view of a portion of the electrode sheet rolling apparatus of FIG. 2.
FIG. 4 is a flowchart of an electrode sheet rolling method according to an embodiment of the present invention.

### [DESCRIPTION OF REFERENCE NUMERALS]

10: electrode sheet rolling apparatus
50: electrode sheet
52: electrode current collector
54, 56: composite layer
100: first rolling roller
A1: first rotation axis
200: second rolling roller
A2: second rotation axis
G1: first angle section
L1: first angle
U1: first sub-section
U2: second sub-section
300: third rolling roller
A3: third rotation axis
G2: second angle section
L2: second angle
U3: third sub-section
U4: fourth sub-section
400: guide
512: suction port

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

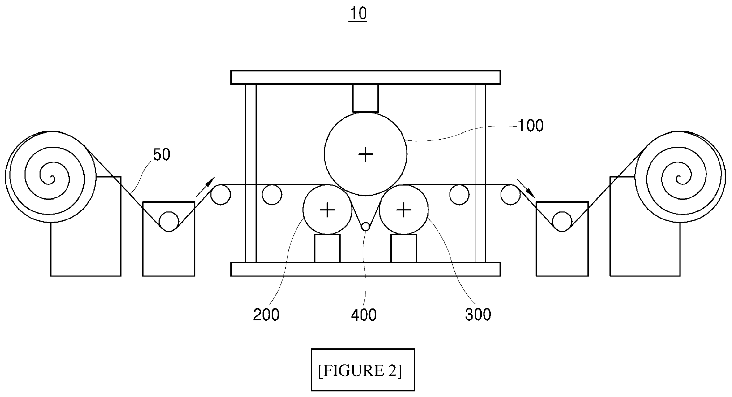

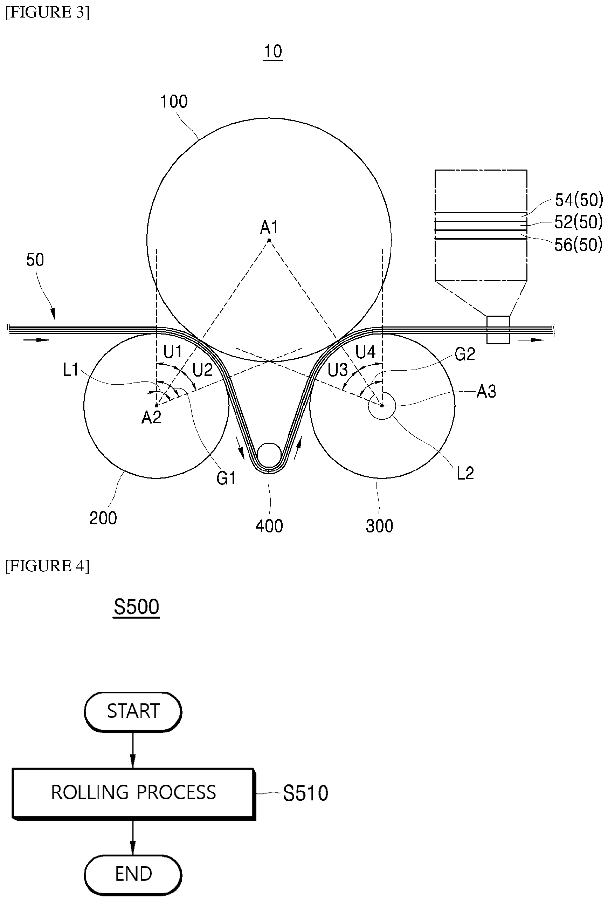

FIG. 1 is a side view schematically illustrating a conventional electrode sheet rolling apparatus which is a tandem rolling apparatus. FIG. 2 is a side view schematically illustrating an electrode sheet rolling apparatus which is a tandem rolling apparatus according to an embodiment of the present invention. FIG. 3 is an enlarged view of a portion of the electrode sheet rolling apparatus of FIG. 2. FIG. 4 is a flowchart of an electrode sheet rolling method according to an embodiment of the present invention.

### [ELECTRODE SHEET ROLLING APPARATUS]

Referring to FIGS. 2 and 3, an electrode sheet rolling apparatus 10 according to an embodiment may include a first rolling roller 100 and a second rolling roller 200. The electrode sheet rolling apparatus 10 may include a third rolling roller 300. The electrode sheet rolling apparatus 10 may include a guide 400.

The electrode sheet rolling apparatus 10 may roll the electrode sheet 50 to a predetermined thickness. The electrode sheet 50 may be a sheet type electrode provided with one or more composite layers 54 and 56 containing an electrode active material formed on an electrode current collector 52. However, unlike the drawing, the one or more composite layers 54 and 56 may be formed on only one side of the electrode current collector 52 rather than both sides.

### [FIRST AND SECOND ROLLING ROLLERS]

The first rolling roller 100 and the second rolling roller 200 may be cylindrical. The first rolling roller 100 and the second rolling roller 200 may be arranged to face each other with the electrode sheet 50 being transported in lengthwise direction interposed therebetween. The first rolling roller 100 and the second rolling roller 200 may be in contact with the electrode sheet 50 passing therebetween. The first rolling roller 100 and the second rolling roller 200 may rotate around a first rotation axis A1 and a second rotation axis A2 extending in widthwise direction, respectively (FIG. 3). Here, the lengthwise direction and the widthwise direction may be those of the electrode sheet 50, respectively.

The second rolling roller 200 may be in contact with the electrode sheet 50 along a circumference thereof over a first angle section G1 about the second rotation axis A2 (FIG. 3).

The first angle section G1 may be an angle section equal to or greater than a predetermined minimum angle and equal to or less than a predetermined maximum angle. The first angle section G1 may include a first sub-section U1 and a second sub-section U2.

The first sub-section U1 may be angle section equal to or greater than a minimum angle of the first angle section G1 and equal to or less than a first angle L1 at which the first rotation axis A1 is located with respect to the second rotation axis A2.

The second sub-section U2 may be an angle section equal to or greater than the first angle L1 and equal to or less than a maximum angle of the first angle section G1.

The electrode sheet 50 may be spaced apart from the first rolling roller 100 in at least a portion of the first sub-section U1 and at least a portion of the second sub-section U2.

Accordingly, since the electrode sheet 50 is in long contact along the circumference of the second rolling roller 200 over the first angle section G1, the transport direction of the electrode sheet 50 may be sufficiently changed. Accordingly, the size and number of rolling rollers of a tandem rolling device 10 that performs multiple consecutive rolling operations may be reduced. That is, the size of the rolling device and the number of rolling rollers may be reduced compared to a conventional tandem rolling device in which the transport direction of the electrode sheet 50 is straight, and thus, multiple rolling apparatuses must be arranged in a straight line. When the size of the tandem rolling device and the number of rolling rollers are reduced, the installation space is reduced such that the manufacturing, installation and maintenance costs of the tandem rolling device may be reduced. In addition, since the transport distance of the electrode sheet 50 may be shortened and the transport path may be simplified, electrode productivity may be improved.

In addition, since the electrode sheet 50 is in long contact along the circumference of the second rolling roller 200 over each of the first sub-section U1 and the second sub-section U2, the electrode sheet 50 may be maintained in a consistently bent state along the circumference of the second rolling roller 200 during, before and after rolling (e.g., primary rolling). As a result, even when the electrode sheet 50 is rolled in a bent state, the one or more composite layers 54 and 56 may be stably, strongly and uniformly adhered to the electrode current collector 52 after rolling. Accordingly, the one or more composite layers 54, 56 are not separated from the electrode current collector 52 due to contraction and expansion caused by repeated charging and discharging, the resistance does not increase such that an abnormal heating phenomenon may not occur, and the capacity of the battery may not decrease. That is, even when the electrode sheet 50 is rolled in a bent state, the quality of the electrode and secondary batteries may be improved and the service life may be extended.

In contrast, when the electrode sheet 50 is not in long contact along the circumference of the second rolling roller 200 over the first sub-section U1 or the second sub-section U2, the electrode sheet 50 may be rolled without being evenly bent such that the one or more composite layers 54 and 56 are unevenly and weakly adhered to the electrode current collector 52. Furthermore, when the electrode sheet 50 is not in long contact along the circumference of the second rolling roller 200 at the second sub-section U2, the electrode sheet 50 may quickly change from being evenly bent to being unevenly bent or straightened after rolling such that the one or more composite layers 54 and 56 are unevenly and weakly adhered to the electrode current collector 52.

In addition, since the electrode sheet 50 is rolled in a consistently bent state along the circumference of the second rolling roller 200, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

Meanwhile, the present invention may also be applied to a general rolling device that performs one-time rolling as well as a tandem rolling device. Furthermore, the above-described effects may also be obtained when the present invention is applied to a general rolling device that performs one-time rolling as well as a tandem rolling device.

The first sub-section U1 may have an angular extent equal to or greater than 0 degrees and equal to or less than 90 degrees. Here, the second sub-section U2 may have an angular extent equal to or greater than the angular extent of the first sub-section U1 and equal to or less than 180 degrees minus the angular extent of the first sub-section U1.

Accordingly, the friction force acting between the electrode sheet 50 and the second rolling roller 200 in the second sub-section U2 may be equal to or greater than the friction force acting between the electrode sheet 50 and the second rolling roller 200 in the first sub-section U1. Therefore, the electrode sheet 50 may be prevented from being pushed in the direction opposite to the transport direction of the electrode sheet 50 during rolling (e.g., primary rolling).

In addition, since the electrode sheet 50 may be in long contact along the circumference of the second rolling roller 200 over the second sub-section U2, the electrode sheet 50 may be maintained in a consistently bent state along the circumference of the second rolling roller 200 during and after rolling (e.g., primary rolling). Accordingly, since the electrode sheet 50 does not quickly change to a consistently unbent state or a straightened state after rolling (e.g., primary rolling), the one or more composite layers 54 and 56 may be stably, strongly and uniformly adhered to the electrode current collector 52.

The angular extent of the second sub-section U2 may correspond to that of the first sub-section U1. That is, the first rotation axis A1 may be positioned at the middle angle of the first angle section G1 about the second rotation axis A2.

Accordingly, the frictional forces acting between the electrode sheet 50 and the second rolling roller 200 in the first sub-section U1 and the second sub-section U2 may be balanced. Therefore, rolling (e.g., primary rolling) may be performed stably.

### [THIRD ROLLING ROLLER]

The third rolling roller 300 may be cylindrical. The third rolling roller 300 may face the first rolling roller 100 with the electrode sheet 50, whose transport direction has been changed by the guide 400, interposed therebetween. The third rolling roller 300 may be in contact with the electrode sheet 50 passing between the first rolling roller 100 and the third rolling roller 300. The third rolling roller 300 may rotate around a third rotation axis A3 extending in the widthwise direction.

Accordingly, a tandem rolling apparatus that performs two consecutive rolling operations may be easily implemented with three rolling rollers. As a result, the size of the tandem rolling apparatus and the number of rolling rollers may be reduced. Thus, the installation space of the tandem rolling apparatus may be reduced, and the manufacturing, installation and maintenance costs may be reduced. In addition, since the transport distance of the electrode sheet 50 may be shortened and the transport path may be simplified, electrode productivity may be improved.

The third rolling roller 300 may be in contact with the electrode sheet 50 along a circumference thereof over a second angle section G2 about the third rotation axis A3.

The second angle section G2 may be an angle section equal to or greater than a predetermined minimum angle and equal to or less than a predetermined maximum angle. The second angle section G2 may include a third sub-section U3 and a fourth sub-section U4.

The third sub-section U3 is an angle section equal to or greater than a minimum angle of the second angle section G2 and equal to or less than a second angle L2 at which the first rotation axis A1 is located with respect to the third rotation axis A3.

The fourth sub-section U4 may be an angle section equal to or greater than the second angle L2 and equal to or less than a maximum angle of the second angle section G2.

The electrode sheet 50 may be spaced apart from the first rolling roller 100 in at least a portion of the third sub-section U3 and at least a portion of the fourth sub-section U4.

Accordingly, since the electrode sheet 50 is in long contact along the circumference of the third rolling roller 300 over the second angle section G2, the transport direction of the electrode sheet 50 may be sufficiently changed. As a result, since the transport direction of the electrode sheet 50 exiting the tandem rolling apparatus 10 may be appropriately adjusted, the installation and maintenance costs of the electrode sheet rolling apparatus 10 may be reduced. In addition, since the transport distance of the electrode sheet 50 may be shortened and the transport path may be simplified, electrode productivity may be improved. Furthermore, the conventional tandem rolling apparatus may be easily replaced.

In addition, since the electrode sheet 50 is in long contact along the circumference of the third rolling roller 300 over each of the third sub-section U3 and the fourth sub-section U4, the electrode sheet 50 may be maintained in a consistently bent state along the circumference of the third rolling roller 300 during, before and after rolling (e.g., secondary rolling). As a result, even when the electrode sheet 50 is rolled in a bent state, the one or more composite layers 54 and 56 may be stably, strongly and uniformly adhered to the electrode current collector 52 after rolling.

In addition, since the electrode sheet 50 is rolled in a consistently bent state along the circumference of the third rolling roller 300, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

According to the embodiments of the present invention, the third sub-section U3 may have an angular extent equal to or greater than 0 degrees and equal to or less than 90 degrees. Here, the fourth sub-section U4 may have an angular extent equal to or greater than the angular extent of the third sub-section U3 and equal to or less than 180 degrees minus the angular extent of the third sub-section U3.

Accordingly, the friction force acting between the electrode sheet 50 and the third rolling roller 300 in the fourth sub-section U4 may be equal to or greater than the friction force acting between the electrode sheet 50 and the third rolling roller 300 in the third sub-section U3. Therefore, the electrode sheet 50 may be prevented from being pushed in the direction opposite to the transport direction of the electrode sheet 50 during rolling (e.g., secondary rolling).

In addition, since the electrode sheet 50 may be in long contact along the circumference of the third rolling roller 300 over the fourth sub-section U4, the electrode sheet 50 may be maintained in a consistently bent state along the circumference of the third rolling roller 300 during and after rolling (e.g., secondary rolling). Accordingly, since the electrode sheet 50 does not quickly change to a consistently unbent state or a straightened state after rolling (e.g., secondary rolling), the one or more composite layers 54 and 56 may be stably, strongly and uniformly adhered to the electrode current collector 52.

Here, as described above, the first sub-section U1 may have an angular extent equal to or greater than 0 degrees and equal to or less than 90 degrees, and the second sub-section U2 may have an angular extent equal to or greater than the angular extent of the first sub-section U1 and equal to or less than 180 degrees minus the angular extent of the first sub-section U1.

Accordingly, the electrode sheet 50 may be reliably prevented from being pushed in the direction opposite to the transport direction of the electrode sheet 50 during the primary and secondary rolling.

In addition, since the electrode sheet 50 may be in long contact along the circumferences of the second rolling roller 200 and the third rolling roller 300 over the second sub-section U2 and the fourth sub-section U4, the electrode sheet 50 may be maintained in a consistently bent state along the circumferences of the second rolling roller 200 and the third rolling roller 300 during and after the primary rolling and the secondary rolling. Accordingly, the one or more composite layers 54 and 56 may be stably, strongly and uniformly adhered to the electrode current collector 52.

The angular extent of the fourth sub-section U4 may correspond to that of the third sub-section U3. That is, the first rotation axis A1 may be positioned at the middle angle of the second angle section G2 about the third rotation axis A3.

Accordingly, the frictional forces acting between the electrode sheet 50 and the second rolling roller 200 in the third sub-section U3 and the fourth sub-section U4 may be balanced. Therefore, rolling (e.g., secondary rolling) may be performed stably.

### [GUIDE]

The guide 400 may be in contact with the electrode sheet 50 after the electrode sheet 50 passes between the first rolling roller 100 and the second rolling roller 200. The guide 400 may change the transport direction of the electrode sheet 50.

The guide 400 may be a roller.

Accordingly, a tandem rolling apparatus may be easily implemented with three rolling rollers and a guide roller.

Meanwhile, a triangle having a base connecting the second rotation axis A2 and the third rotation axis A3 may be formed when the first rotation axis A1, the second rotation axis A2 and the third rotation axis A3 are connected in an imaginary plane perpendicular to the first rotation axis A1, the second rotation axis A2 and the third rotation axis A3. Here, the guide 400 may be positioned between the second rolling roller 200 and the third rolling roller 300 in an extending direction of the base, and is positioned, in a direction perpendicular to the base, on an opposite side from the first rotation axis A1 and the first rolling roller 100, the first rotation axis A1 and the first rolling roller 100 positioned on one side of the base.

Accordingly, the installation space of the tandem rolling apparatus and the transport path of the electrode sheet 50 may be reduced.

Here, the diameter of the first rolling roller 100 may be larger than those of the second rolling roller 200 and the third rolling roller 300, and the guide 400 may be positioned between the second rolling roller 200 and the third rolling roller 300.

Accordingly, the installation space of the tandem rolling apparatus may be minimized and the transport path of the electrode sheet 50 may be optimized.

As described above, when a triangle having a base connecting the second rotation axis A2 and the third rotation axis A3 is formed by connecting the first rotation axis A1, the second rotation axis A2 and the third rotation axis A3 in an imaginary plane perpendicular to the first rotation axis A1, the second rotation axis A2 and the third rotation axis A3, the diameter of the second rolling roller 200 may correspond to that of the third rolling roller 300.

Accordingly, the primary rolling and the secondary rolling may be performed stably.

As described above, when a triangle having a base connecting the second rotation axis A2 and the third rotation axis A3 is formed by connecting the first rotation axis A1, the second rotation axis A2 and the third rotation axis A3 in an imaginary plane perpendicular to the first rotation axis A1, the second rotation axis A2 and the third rotation axis A3, the guide 400 is positioned between the second rolling roller 200 and the third rolling roller 300 in an extending direction of the base, and is positioned, in a direction perpendicular to the base, on an opposite side of the first rotation axis A1 and the first rolling roller 100, the first rotation axis (A1) and the first rolling roller (100) being positioned on one side of the base, and the diameter of the first rolling roller 100 is larger than those of the second rolling roller 200 and the third rolling roller 300, and the guide 400 is disposed between the second rolling roller 200 and the third rolling roller 300, each of the first sub-section U1, second sub-section U2, third sub-section U3 and fourth sub-section U4 may have an angular extent equal to or greater than 20 degrees and equal to or less than 40 degrees.

Accordingly, the installation space of the tandem rolling apparatus may be minimized and the transport path of the electrode sheet 50 may be optimized.

### [ELECTRODE SHEET ROLLING METHOD]

Referring to FIG. 4, the electrode sheet rolling method according to an embodiment of the present invention may include a rolling process S510.

In the rolling process S510, the electrode sheet 50, transported in the lengthwise direction, is rolled between the first rolling roller 100 and the second rolling roller 200 while being in contact with the second rolling roller 200 along a circumference thereof over the first angle section G1 about the second rotation axis A2, the electrode sheet 50 being rolled at the first angle L1 about the second rotation axis A2, and the electrode sheet 50 may be spaced apart from the first rolling roller 100 in at least a portion of the first sub-section U1 before rolling and in at least a portion of the second sub-section U2 after rolling.

Accordingly, since the electrode sheet 50 is in long contact along the circumference of the second rolling roller 200 over the first angle section G1, the transport direction of the electrode sheet 50 may be sufficiently changed. Accordingly, the size and number of rolling rollers of a tandem rolling device 10 that performs multiple consecutive rolling operations may be reduced. That is, the size of the rolling device and the number of rolling rollers may be reduced compared to a conventional tandem rolling device in which the transport direction of the electrode sheet 50 is straight, and thus, multiple rolling apparatuses must be arranged in a straight line. When the size of the tandem rolling device and the number of rolling rollers are reduced, the installation space is reduced such that the manufacturing, installation and maintenance costs of the tandem rolling device may be reduced. In addition, since the transport distance of the electrode sheet 50 may be shortened and the transport path may be simplified, electrode productivity may be improved.

In addition, since the electrode sheet 50 is in long contact along the circumference of the second rolling roller 200 over each of the first sub-section U1 and the second sub-section U2, the electrode sheet 50 may be maintained in a consistently bent state along the circumference of the second rolling roller 200 during, before and after rolling (e.g., primary rolling). As a result, even when the electrode sheet 50 is rolled in a bent state, the one or more composite layers 54 and 56 may be stably, strongly and uniformly adhered to the electrode current collector 52 after rolling. Accordingly, the one or more composite layers 54, 56 are not separated from the electrode current collector 52 due to contraction and expansion caused by repeated charging and discharging, the resistance does not increase such that an abnormal heating phenomenon may not occur, and the capacity of the battery may not decrease. That is, even when the electrode sheet 50 is rolled in a bent state, the quality of the electrode and secondary batteries may be improved and the service life may be extended.

In addition, since the electrode sheet 50 is rolled in a consistently bent state along the circumference of the second rolling roller 200, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

Meanwhile, the present invention may also be applied to a general rolling device that performs one-time rolling as well as a tandem rolling device. Furthermore, the above-described effects may also be obtained when the present invention is applied to a general rolling device that performs one-time as rolling well as a tandem rolling device.

In addition, in the rolling process S510, the electrode sheet 50 whose transport direction changed by the guide 400 after rolling between the first rolling roller 100 and the second rolling roller 200 is rolled between the first rolling roller 100 and the third rolling roller 300 while being in contact with the third rolling roller 300 along a circumference thereof over the second angle section G2 about the third rotation axis A3, the electrode sheet 50 being rolled at the second angle L2 about the third rotation axis A3, and the electrode sheet 50 may be spaced apart from the first rolling roller 100 in at least a portion of the third sub-section U3 before rolling and in at least a portion of the fourth sub-section U4 after rolling.

Accordingly, a tandem rolling apparatus that performs two consecutive rolling operations may be easily implemented with three rolling rollers. As a result, the size of the tandem rolling apparatus and the number of rolling rollers may be reduced. Thus, the installation space of the tandem rolling apparatus may be reduced, and the manufacturing, installation and maintenance costs may be reduced. In addition, since the transport distance of the electrode sheet 50 may be shortened and the transport path may be simplified, electrode productivity may be improved.

In addition, since the electrode sheet 50 is in long contact along the circumference of the third rolling roller 300 over the second angle section G2, the (transport) direction of the electrode sheet 50 may be sufficiently changed. As a result, since the transport direction of the electrode sheet 50 exiting the tandem rolling apparatus 10 may be appropriately adjusted, the installation and maintenance costs of the electrode sheet rolling apparatus 10 may be reduced. In addition, since the transport distance of the electrode sheet 50 may be shortened and the transport path may be simplified, electrode productivity may be improved. Furthermore, the conventional tandem rolling apparatus may be easily replaced.

In addition, since the electrode sheet 50 is in long contact along the circumference of the third rolling roller 300 over each of the third sub-section U3 and the fourth sub-section U4, the electrode sheet 50 may be maintained in a consistently bent state along the circumference of the third rolling roller 300 during, before and after rolling (e.g., secondary rolling). As a result, even when the electrode sheet 50 is rolled in a bent state, the one or more composite layers 54 and 56 may be stably, strongly and uniformly adhered to the electrode current collector 52 after rolling.

In addition, since the electrode sheet 50 is rolled in a consistently bent state along the circumference of the third rolling roller 300, the one or more composite layers 54 and 56 may be adhered to the electrode current collector 52 with the increased surface areas of the electrode current collector 52 and the one or more composite layers 54 and 56. As a result, the one or more composite layers 54 and 56 may be adhered to the electrode current collector 52 more stably, strongly and uniformly than in the prior art.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode sheet rolling apparatus (10) for rolling an electrode sheet (50), in which one or more composite layers (54, 56) containing an electrode active material are formed on an electrode current collector (52), to a predetermined thickness, the electrode sheet rolling apparatus (10) comprising:
a cylindrical first rolling roller (100) and a second rolling roller (200) arranged to face each other with the electrode sheet (50), being transported in a lengthwise direction, interposed therebetween, wherein the first rolling roller (100) and the second rolling roller (200) are in contact with the electrode sheet (50) passing therebetween and rotate around a first rotation axis (A1) and a second rotation axis (A2) extending in a widthwise direction, respectively,
wherein the second rolling roller (200) is in contact with the electrode sheet (50) along a circumference thereof over a first angle section (G1) about the second rotation axis (A2),
the first angle section (G1) comprises: a first sub-section (U1) equal to or greater than a minimum angle of the first angle section (G1) and equal to or less than a first angle (L1) at which the first rotation axis (A1) is located with respect to the second rotation axis (A2); and a second sub-section (U2) equal to or greater than the first angle (L1) and equal to or less than a maximum angle of the first angle section (G1), and
the electrode sheet (50) is spaced apart from the first rolling roller (100) in at least a portion of the first sub-section (U1) and at least a portion of the second sub-section (U2).

2. The electrode sheet rolling apparatus of claim 1, wherein the first sub-section (U1) has an angular extent equal to or greater than 0 degrees and equal to or less than 90 degrees, and
the second sub-section (U2) has an angular extent equal to or greater than the angular extent of the first sub-section (U1) and equal to or less than 180 degrees minus the angular extent of the first sub-section (U1).

3. The electrode sheet rolling apparatus of claim 2, wherein the angular extent of the second sub-section (U2) corresponds to the angular extent of the first sub-section (U1).

4. The electrode sheet rolling apparatus of any one of claims 1 to 3, further comprising:
a guide (400) in contact with the electrode sheet (50) after the electrode sheet (50) passes between the first rolling roller (100) and the second rolling roller (200) and configured to change a transport direction of the electrode sheet (50); and
a cylindrical third rolling roller (300) facing the first rolling roller (100) with the electrode sheet (50), whose transport direction has been changed by the guide (400), interposed therebetween wherein the third rolling roller (300) is in contact with the electrode sheet (50) passing between the first rolling roller (100) and the third rolling roller (300), and rotates around a third rotation axis (A3) extending in the widthwise direction.

5. The electrode sheet rolling apparatus of claim 4, wherein the third rolling roller (300) is in contact with the electrode sheet (50) along a circumference thereof over a second angle section (G2) about the third rotation axis (A3),
the second angle section (G2) comprises: a third sub-section (U3) equal to or greater than a minimum angle of the second angle section (G2) and equal to or less than a second angle (L2) at which the first rotation axis (A1) is located with respect to the third rotation axis (A3); and a fourth sub-section (U4) equal to or greater than the second angle (L2) and equal to or less than a maximum angle of the second angle section (G2), and
the electrode sheet (50) is spaced apart from the first rolling roller (100) in at least a portion of the third sub-section (U3) and at least a portion of the fourth sub-section (U4).

6. The electrode sheet rolling apparatus of claim 5, wherein the third sub-section (U3) has an angular extent equal to or greater than 0 degrees and equal to or less than 90 degrees, and
the fourth sub-section (U4) has an angular extent equal to or greater than the angular extent of the third sub-section (U3) and equal to or less than 180 degrees minus the angular extent of the third sub-section (U3).

7. The electrode sheet rolling apparatus of claim 6, wherein the first sub-section (U1) has an angular extent equal to or greater than 0 degrees and equal to or less than 90 degrees, and
the second sub-section (U2) has an angular extent equal to or greater than the angular extent of the first sub-section (U1) and equal to or less than 180 degrees minus the angular extent of the first sub-section (U1).

8. The electrode sheet rolling apparatus of claim 6, wherein the angular extent of the fourth sub-section (U4) corresponds to the angular extent of the third sub-section (U3).

9. The electrode sheet rolling apparatus of any one of claims 4 to 8, wherein the guide (400) is a roller.

10. The electrode sheet rolling apparatus of any one of claims 4 to 9, wherein a triangle having a base connecting the second rotation axis (A2) and the third rotation axis (A3) is formed when the first rotation axis (A1), the second rotation axis (A2) and the third rotation axis (A3) are connected in an imaginary plane perpendicular to the first rotation axis (A1), the second rotation axis (A2) and the third rotation axis (A3), and
the guide (400) is positioned between the second rolling roller (200) and the third rolling roller (300) in an extending direction of the base, and is positioned, in a direction perpendicular to the base, on an opposite side from the first rotation axis (A1) and the first rolling roller (100), the first rotation axis (A1) and the first rolling roller (100) being positioned on one side of the base.

11. The electrode sheet rolling apparatus of claim 10, wherein a diameter of the first rolling roller (100) is larger than those of the second rolling roller (200) and the third rolling roller (300), and
the guide (400) is disposed between the second rolling roller (200) and the third rolling roller (300).

12. The electrode sheet rolling apparatus of claims 10 and 11, wherein the diameter of the second rolling roller (200) corresponds to that of the third rolling roller (300).

13. The electrode sheet rolling apparatus of any one of claims 5 to 8, wherein a triangle having a base connecting the second rotation axis (A2) and the third rotation axis (A3) is formed when the first rotation axis (A1), the second rotation axis (A2) and the third rotation axis (A3) are connected in an imaginary plane perpendicular to the first rotation axis (A1), the second rotation axis (A2) and the third rotation axis (A3),
the guide (400) is positioned between the second rolling roller (200) and the third rolling roller (300) in an extending direction of the base, and is positioned, in a direction perpendicular to the base, on an opposite side from the first rotation axis (A1) and the first rolling roller (100), the first rotation axis (A1) and the first rolling roller (100) being positioned on one side of the base,
a diameter of the first rolling roller (100) is larger than those of the second rolling roller (200) and the third rolling roller (300),
the guide (400) is disposed between the second rolling roller (200) and the third rolling roller (300), and
each of the first sub-section (U1), second sub-section (U2), third sub-section (U3) and fourth sub-section (U4) has an angular extent equal to or greater than 20 degrees and equal to or less than 40 degrees.

14. An electrode sheet rolling method (S500) using the electrode sheet rolling apparatus (10) of any one of claims 1 to 3, the electrode sheet rolling method (S500) comprising: a rolling process (S510) in which the electrode sheet (50), transported in the lengthwise direction, is rolled between the first rolling roller (100) and the second rolling roller (200) while being in contact with the second rolling roller (200) along a circumference thereof over the first angle section (G1) about the second rotation axis (A2), the electrode sheet (50) being rolled at the first angle (L1) about the second rotation axis (A2), wherein the electrode sheet (50) is spaced apart from the first rolling roller (100) in at least a portion of the first sub-section (U1) before rolling and in at least a portion of the second sub-section (U2) after rolling.

15. The electrode sheet rolling method of claim 14, wherein the electrode sheet rolling apparatus (10) comprises: a guide (400) in contact with the electrode sheet (50) after the electrode sheet (50) passes between the first rolling roller (100) and the second rolling roller (200) and configured to change a transport direction of the electrode sheet (50); and
a cylindrical third rolling roller (300) facing the first rolling roller (100) with the electrode sheet (50), whose transport direction has been changed by the guide (400), interposed therebetween wherein the third rolling roller (300) is in contact with the electrode sheet (50) passing between the first rolling roller (100) and the third rolling roller (300), and rotates around a third rotation axis (A3) extending in the widthwise direction,
wherein the third rolling roller (300) is in contact with the electrode sheet (50) along a circumference thereof over a second angle section (G2) about the third rotation axis (A3),
the second angle section (G2) comprises: a third sub-section (U3) equal to or greater than a minimum angle of the second angle section (G2) and equal to or less than a second angle (L2) at which the first rotation axis (A1) is located with respect to the third rotation axis (A3); and a fourth sub-section (U4) equal to or greater than the second angle (L2) and equal to or less than a maximum angle of the second angle section (G2),
the electrode sheet (50) is spaced apart from the first rolling roller (100) in at least a portion of the third sub-section (U3) and at least a portion of the fourth sub-section (U4), and
in the rolling process (S510), the electrode sheet (50) whose transport direction changed by the guide (400) after rolling between the first rolling roller (100) and the second rolling roller (200) is rolled between the first rolling roller (100) and the third rolling roller (300) while being in contact with the third rolling roller (300) along a circumference thereof over the second angle section (G2) about the third rotation axis (A3), the electrode sheet (50) being rolled at the second angle (L2) about the third rotation axis (A3) wherein the electrode sheet (50) is spaced apart from the first rolling roller (100) in at least a portion of the third sub-section (U3) before rolling and in at least a portion of the fourth sub-section (U4) after rolling.
